# EUROPEAN PATENT SPECIFICATION

(11) **EP 2 192 065 B1**
(45) Date of publication and mention of the grant of the patent: **03.07.2013**
(21) Application number: 09175651.0
(22) Date of filing: 11.11.2009
(51) Int. Cl.: B65G 63/00, B65G 63/02

(54) **Automatic system for handling and transporting containers between a quay and an inland stocking site**
Automatisches System zum Handhaben und Transportieren von Containern zwischen einer Hafenanlage und einem landeinwärts befindlichen Lagerort
Système automatique de manipulation et de transport de conteneurs entre le quai d'un port et un site de stockage terrestre

(30) Priority: 27.11.2008 IT TO20080883
(43) Date of publication of application: 02.06.2010
(73) Proprietor: Politecnico di Torino, 10129 Torino (IT); Istituto Siti, 10138 Torino (IT)
(72) Inventor: Belforte, Guido, 10129, Torino (IT); Raparelli, Terenziano, 10129, Torino (IT); Grassi, Roberto, 10129, Torino (IT); Roscelli, Riccardo, 10138, Torino (IT); Mondini, Giulio, 10138, Torino (IT)
(74) Representative: Frontoni, Stefano

(56) References cited:
- US-A- 3 754 669
- US-A- 4 973 219
- US-A1- 2006 045 659

## Description

The present invention refers to an automatic system for handling and transporting containers between a quay and an inland stocking site, comprising:
- a quay crane for loading and unloading containers, from/into a ship docked at the quay,
- rail transport means for transporting said containers between said quay and said stocking site, said rail transport means comprising a rail track module for loading and unloading containers onto and/or from trains at the quay area.

An example of a system of this type is disclosed in US 3,754,669.

The United States patent US 5,505,585 describes another system of the abovementioned type, wherein such rail track module is made up of rail tracks running parallel to the quay and which are arranged facing a movement area, interposed between the rail track module and the quay crane, where the containers unloaded from the ship, or to be loaded thereonto, are temporarily stocked. Transport of containers between the quay crane and the movement area, and between the latter and the abovementioned rail tracks, is obtained by means of wheeled transport operated by an operator.

The Unites States application n° US 2006/0045659 A1 describes a system analogous to the one indicated above but wherein the rail track module is made up of rail tracks running substantially orthogonal to the quay. In this solution, the containers unloaded by the quay crane are transported directly to the rail track module, through wheeled elevating platform trucks operated by an operator. Likewise, the containers transported by trains arriving on the rail track module and to be loaded onto the ship, are unloaded from the trains through such elevating platform trucks, which then take them directly to the quay crane.

In both solutions indicated above, the ground area for stocking the containers is separated from the loading and unloading area at the sea, providing for a system for transporting containers on rails which manages the flow of containers between such areas. This configuration of part allows limiting the space occupied by the port in the sea area, while occupying, instead, an inland area suitably selected according to the availability of space and accessibility thereof.

However, the drawback of the solutions indicated above lies in the fact that they require an interface made up of wheeled transport means controlled by an operator to connect the quay crane to the rail transport means.

Such a configuration is particularly disadvantageous in that it firstly requires space at the sea area, specifically dedicated to the movement of the abovementioned wheeled transport means. In addition, such space should be large enough to allow managing the large amounts of containers which are usually managed by systems of the type in question. Secondly, such type of interface causes management criticality to the entire system in that - requiring the intervention of many operators (each of which control, for example, an elevating platform truck for transporting only one container between the quay crane and the trains) - it does not allow a predetermined management scheme.

The present invention has the object of improving the systems of the abovementioned type, reducing human intervention to the minimum and creating an automatic system for handling and transporting containers between a quay and an inland stocking site, which provides for an entirely predetermined flow of containers from when they are unloaded from the ship up to when they are positioned in the inland stocking site. The system according to the present invention also allows reducing the sea port spaces to the minimum.

Such object is particularly obtained through an automatic system having the characteristics of claim 1.

Now the invention shall be described in detail strictly for exemplifying and non-limiting purposes, with reference to the attached drawings, wherein:
- figure 1 represents a plan schematic view of an automatic system for handling and transporting containers between a quay and an inland stocking site;
- figure 2 represents a detailed plan schematic view of the system of figure 1 according to a first embodiment;
- figure 3 represents a detailed plan schematic view of the system of figure 1 according to a second embodiment;
- figure 4 represents a perspective schematic view of a detail of the system of figure 1;
- figure 5 represents a plan schematic view of a detail of the system of figure 1;
- figures 6 and 7 represent two different organisation diagrams of the system of figure 1.

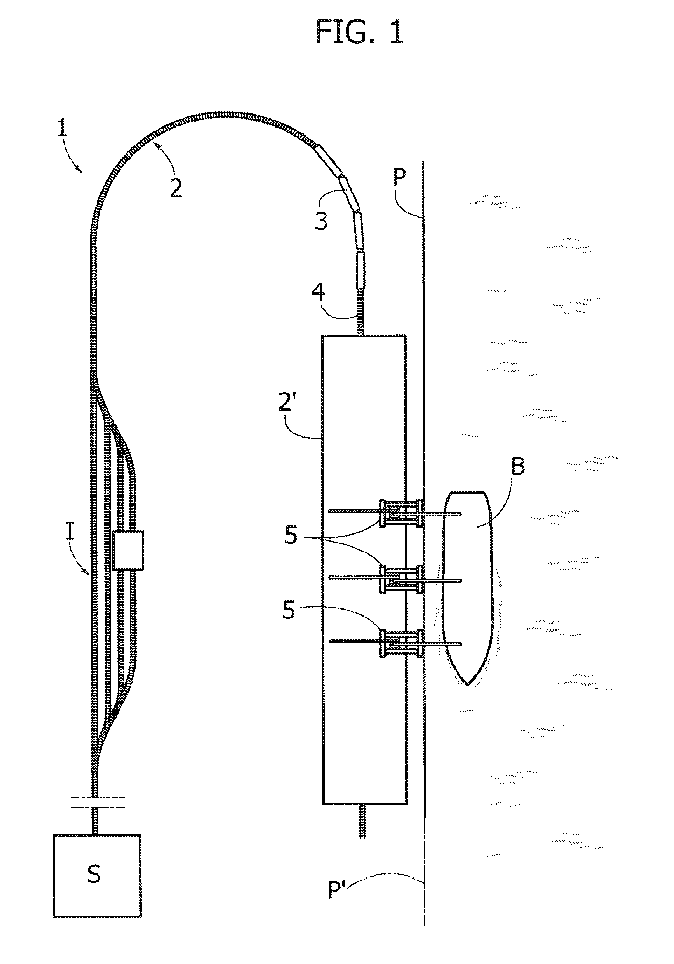

Referring to figures 1-5, an automatic system for handling and transporting containers between a quay P and a inland stocking site S is indicated with 1. The quay P identifies a direction of extension indicated with P'. Vessels B for transporting containers dock at the quay P, being positioned substantially parallel to the direction P'.

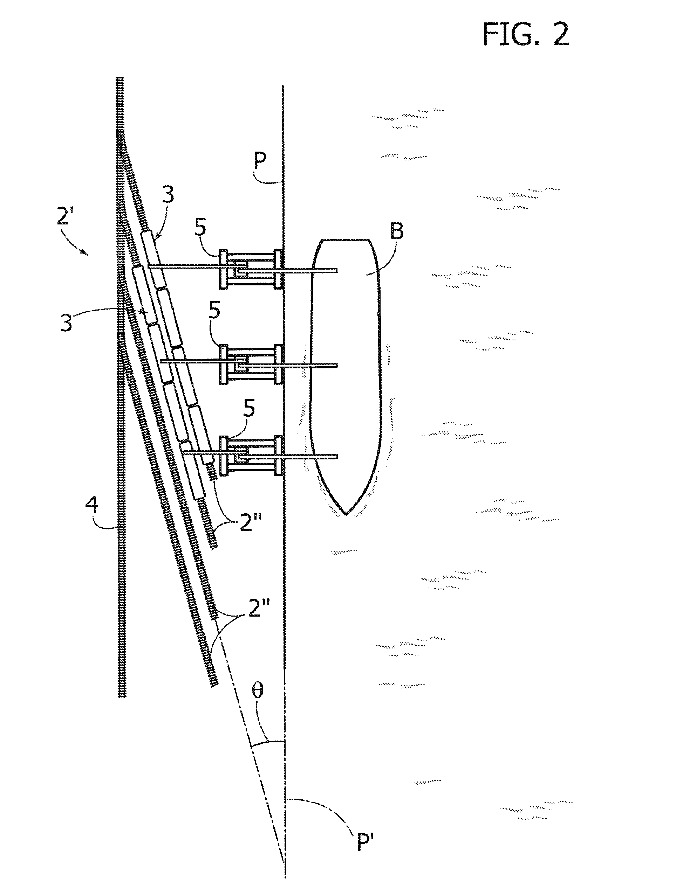

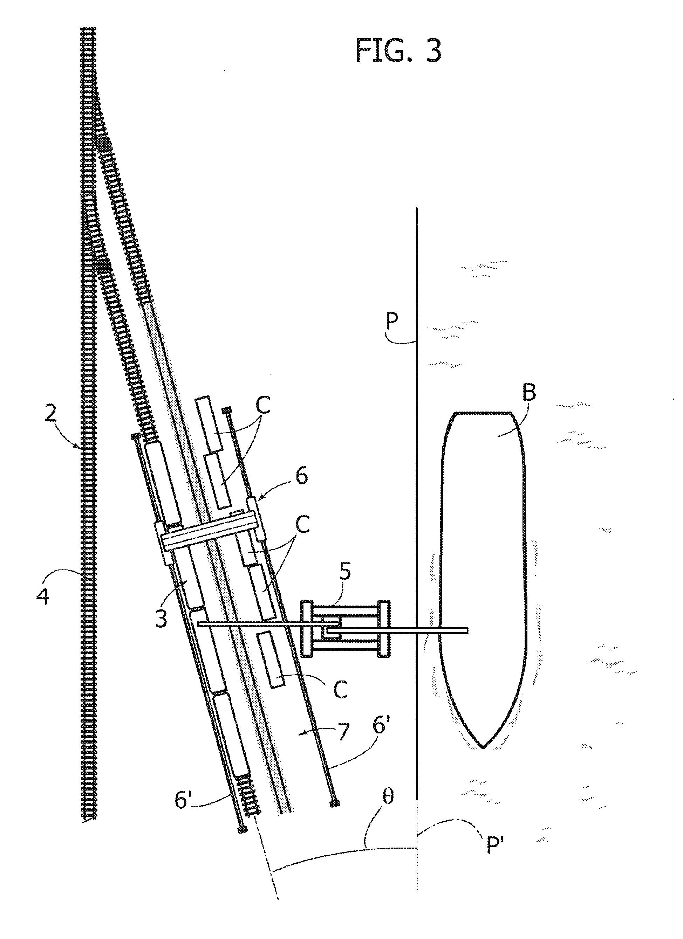

The system 1 comprises rail transport means 2 for transporting containers between the quay P and the stocking site S. Such transport means 2 in particular comprise a rail track module 2' arranged at the quay area, where trains 3 arrive to be loaded with containers coming from the vessel B, or for unloading the containers coming from the stocking site S which are intended for such vessel B. The rail track module 2' may be made according to various embodiments respectively represented in figures 2 and 3.

In both such embodiments, such rail track module 2' is made up of groups of rail tracks 2" parallel to each other, which are oriented according to a direction inclined with respect to direction P' of the quay P by an angle θ different from 0° and 90°. In a preferred embodiment the angle θ is comprised between 0° and 20°, and according to an even more preferred embodiment such angle θ is about 7°. The rail tracks 2" of the module 2' converge on one or more rail tracks of a main corridor 4 which runs along a direction substantially parallel to the direction P' of the quay and which represents the corridor for entry and exit of trains from and to the quay P.

The particular orientation of the rail tracks 2" with respect to the direction P' of the quay allows the rail track module 2' to be directly interfaced with a quay crane 5. As illustrated hereinafter, for example it may be possibly provided for that one quay crane directly serves a plurality of rail tracks 2" of the module 2'.

Referring to figure 2, in the embodiment illustrated therein, each quay crane 5 is above a group of rail tracks 2" in such a manner to be able to load and unload containers for the respective trains 3 which travel on each of such rail tracks 2". In particular, according to such embodiment, when loading and unloading the containers, the trains 3 are advanced intermittently so that each wagon stops beneath the boom of the quay crane 5 for the period of time required for the loading or unloading operations. Thus, in such embodiment each rail track 2", with the aim of allowing loading and unloading operations as indicated above, must be longer than the train travelling thereon, and in particular it must be at least three times longer.

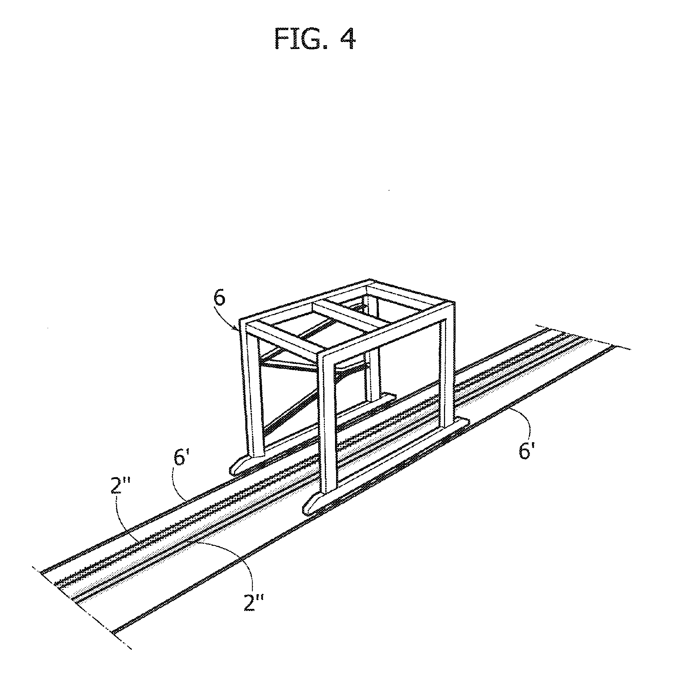

In the embodiment of figure 3 it is instead provided for that prearranged adjacent to the rail tracks 2" be space 7, extended along the rail tracks themselves, and suitable to receive the containers C to serve as a "reservoir" for the flow of containers between the quay crane and the trains. The system 1 comprises a rail crane 6 moving on rails 6' along a direction substantially parallel to the rail tracks 2", and suitable for loading - by means of the quay crane - the containers arranged along the space 7 onto the wagons of the trains, or vice versa to unload the containers from the wagons of the trains and arrange them in such space 7. Preferably, the rail crane 6 is a crane having a portal facility above the group of rail tracks 2", whose rails 6' are arranged respectively at the opposite sides of said group of rail tracks 2". In such case, as observable in figure 3, the space 7 adjacent to the rail tracks 2", for temporary deposit of the container, is located within the rail tracks 6' of the rail crane 6. Figure 4 shows a perspective view of the intermodal module of the embodiment of figure 3. As observable in figures 3 and 4, one of the two rail tracks 2" beneath the portal crane 6 is a rail track submerged into the ground or flushed thereon, in such a manner that the space occupied thereby may be used, analogously to the space 7, to receive the containers C.

In the embodiment of figure 3, the rail crane, moving along its rail tracks, may load or unload the containers of each wagon of the trains allowing the latter to remain standstill. Thus, the rail tracks 2" in this case may have a length equivalent to that of the trains.

A preferred embodiment provides for that the space of the "reservoir" 7 for the movement of containers between the quay crane 5 and the trains 3, served by the rail crane 6, extends beyond the end of the rail tracks up to being entirely overlapped with the rail tracks 2" of an adjacent group of rail tracks, so that the rail crane 6 also serves the rail tracks of such group.

In an embodiment of the system, stocked in such space 7 may be a number of containers equivalent to that loadable on thirteen wagons.

In the embodiment of figure 3, the quay crane may be arranged at any position, obviously depending on the position of the vessel B. The only requirement is that of having vacant deposit space in front of the quay crane, corresponding to at least two containers.

In the embodiment of figure 3, the operation of unloading containers from the vessel B provides for the quay crane 5 picking the containers and positioning them in the "reservoir" space 7 located beneath the boom of the quay crane 5. The rail crane 6 thus picks the containers from such station to move them directly onto the flat wagons of the trains, or, to move them to another position of the "reservoir" space 7.

Analogously, the loading of the vessel B provides for the rail crane 6 unloading containers from trains stationary on the rail tracks 2" and the same rail crane 6 arranging them in the space 7 located beneath the boom of the quay crane 5. The latter loads the containers arranged beneath its boom onto the vessel B.

The embodiment of figure 3 has the considerable advantage of using, as already mentioned previously, the space 7 adjacent to the rail tracks 2" as a reservoir for the flow of containers between the quay crane and the trains on the rail tracks 2". Due to the space 7, the quay crane 5 may unload containers from the vessel B even when there is no train on the rail tracks 2", in that in such case the rail crane 6 may position such containers in such "reservoir" space 7, in the meanwhile awaiting for the arrival of a train on which such containers may be loaded. Analogously, containers meant to be loaded onto the vessel B may be unloaded from the trains even when there is no quay crane available, in that the rail crane 6 may still temporarily position containers in the "reservoir" space 7, awaiting for the quay crane to start operating.

In a preferred embodiment, a platform may be provided for interposed between the quay crane 5 and the "reservoir" space 7, adjacent to the rail tracks 2", and which is located at a height about 7 m off the ground. This platform would allow making the operations of quay crane even more independent with respect to those of the rail crane.

Once again referring to figure 1, alongside the corridor 4, the rail transport means provide for one or more rail tracks directed to the stocking site S. As observable in figure 1, possibly provided for before the stocking site S is an intermediate zone I wherein the containers are handled through intermediate operations.

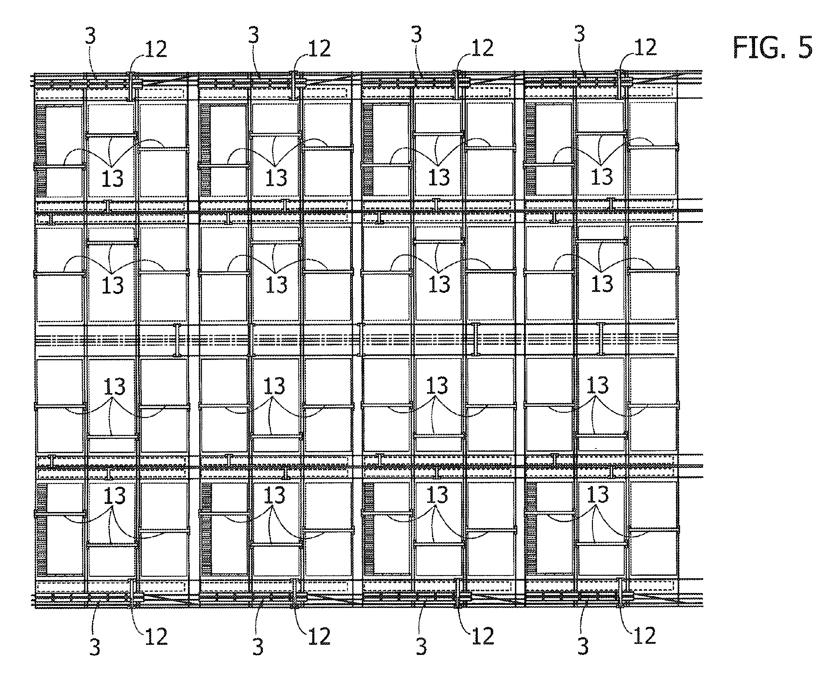

The stocking site S is made up of a highly automated site for managing containers. Particularly used in such sites are portal cranes called RMG (rail mounted gantry crane) which are capable of unloading the trains and subsequently arranging the containers orderly alone with an extremely high productivity. An embodiment of such stocking site is illustrated in figure 5. As observable in such figure, provided for along the rail tracks of the trains 11 that arrive at the stocking site is a first series of portal cranes 12, moveable along a direction parallel to the rail tracks 11, which are suitable for quick unloading of the goods in the area immediately adjacent to the rail tracks. Furthermore, provided for in the stocking site S is a second series of portal cranes 13, moveable along a direction substantially perpendicular to that of the rail tracks, which are suitable to position the containers in the stocking areas.

The stocking module represented in figure 5 is capable of managing a number of containers depending on the number of levels of stacking equivalent to 24000 TEU (**T**wenty-**F**oot **E**quivalent **U**nit) per level.

As observable in figure 5, the stocking site S also provides for passages 14 which pass through two separate rows of stocking areas, moving on which are translation means such as electrically driven platforms or AGV (Automated guided vehicle) capable of facilitating the arrangement operations between the stocking areas. Furthermore, integrated in the stocking site S is a railway station 15 connected to the National railway system.

The means of lifting and moving the containers used in the system 1, such as the quay crane and the portal crane may be of any type serving the purposes indicated above.

In particular, the quay crane may be a conventional two-wagon quay crane. Such cranes are made up of two wagons provided with spreaders, which use an intermediate platform (referred to as the crane's belly), where the containers are deposited. Operations regarding coupling/uncoupling of the container locking means may be completed on such platform. Further provided for at the intermediate platform are means for rotating the containers by an angle equivalent to the angle θ of inclination of the rail tracks 2" with respect to the direction P' of the quay P. Such means may, for example, be made up of a rotating platform or a device installed on the ground side spreader to align the containers with the rail tracks. Alternatively, the positioning tolerance of the spreader may also be exploited when lower than the desired inclination by rotating the container by means of two manoeuvres. For example quay cranes of the type sold by KONE and ZPMC may be used in the system 1.

The rail cranes of the quay may be cranes of the conventional type, with about a 15 m working space beneath the feet.

The trains used in the system 1 are made up of automatic shuttles made up of driving means and flat wagons capable of transporting two stacks of containers. Such shuttle trains are generally shorter with respect to the conventional ones for transporting containers, due to length restrictions set by the quay. The flat wagons of the shuttle trains may also have different lengths, in a combination capable of guaranteeing the best efficiency possible for transporting containers.

As mentioned previously, in the system in question the quay area for loading and unloading containers, onto and from the ship is separated from the container stocking and disposal area, which is in particular advantageously arranged in an easily accessible inland area and with large availability of space. Due to the particular arrangement of the rail tracks 2" on the quay area, the system according to the present invention also allows reducing the extension of the sea port area with respect to the known system, considering the same number of containers handled. As a matter of fact, contrary to the portal systems of the prior art described at the beginning, wherein alongside the space for the intermodal rail track modules, there also arises the need for a space dedicated to the movement of wheeled means for transporting containers between the quay crane and the rail tracks, in the system described herein the rail track module is directly interfaced with the quay crane in such a manner that in the quay area there only arises the need for a space for accommodating such module.

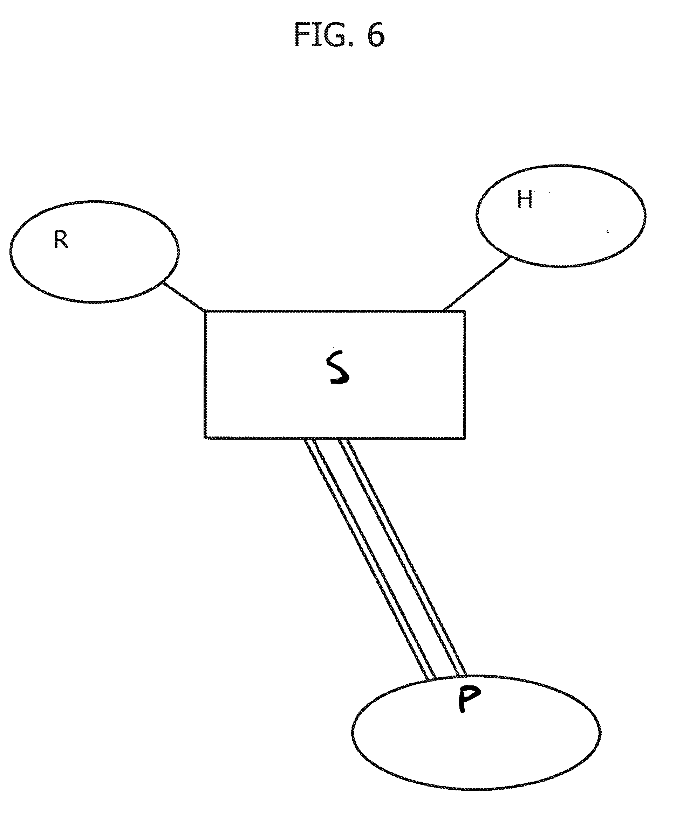

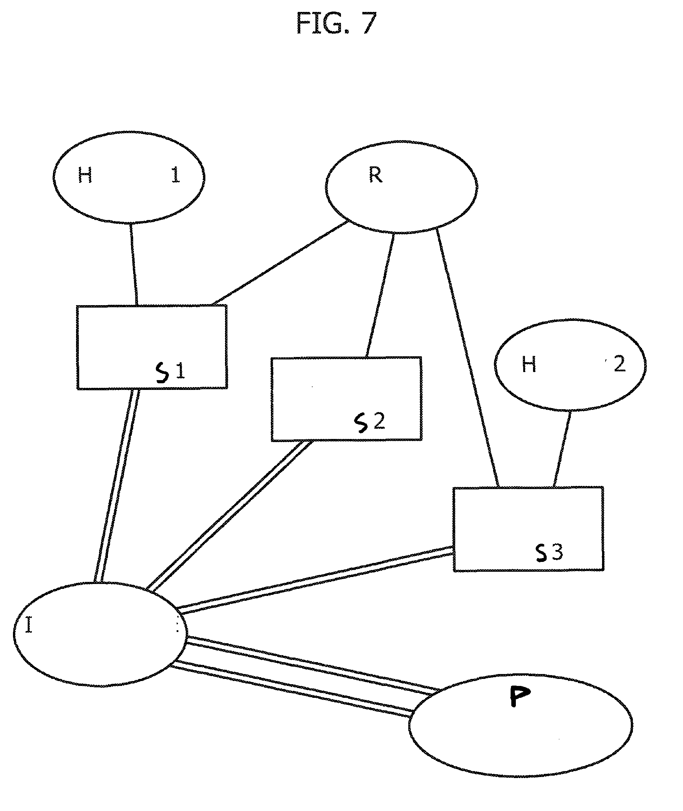

Figures 6 and 7 represent two different organisation diagrams of an automatic system of the type described above, for handling and transporting containers between a quay and an inland stocking sites. Figure 6 shows a solution of the system provided in which is a single stocking sites which communicates - on one hand - with the quay or sea port P and - on the other - with the highway and railway R network. Figure 7 instead represents a modular organisation system provided in which are a plurality of small indland stocking sites S1, S2, S3 which communicate with the quay P and the highway H1, H2 and railway R networks. In the latter case, the stocking sites are easier to adapt to the external environment in that they are smaller.

Due to the fact that the rail track module of the rail transport means may be directly interfaced to the quay crane - an event, as mentioned previously, that occurs due to the particular arrangement of the rail tracks 2" of such module - the number of operators required to transport containers from the ship to the trains is considerable low. Thus, an entirely structured architecture for managing containers may be created. The system described above is particularly managed through a control logic structured at different levels, wherein the central control and management functions are separated from the local control functions.

The central control unit serves to:
1. programme the directions of the shuttles depending on the loading needs and the required times;
2. synchronise the management of ordinary functions integrating them with the management of buffers and special operations;
3. monitor the entire system following the movement of all containers;
4. intervene when necessary through procedures to handle emergency situations;
5. supervise traffic on the connection lines between quays and dry port.

Regarding the operation of point 3, provided for are control means suitable for identifying the position of the containers according to the position of the shuttles and the position at which the containers are loaded thereonto.

The local control level is distributed at some points of the system and serves functions that substantially have no influence on the general, operation of the system. The operations performed by the local subsystems are:
1. management of the shuttles exiting from loading rail tracks along the quay,
2. management of the shuttles entering onto the loading rail tracks along the quay,
3. local management of the buffer rail tracks,
4. managing priorities.

Regarding the functionality of the local control operations, a series of logic conditions or other types of conditions and random choice criteria are used for managing priorities.

In order to perform the controls indicated above, the sensor system represents a crucial point for the entire system. Regarding this, wireless communication sensor systems may be used. Transponder-based systems may also be used, with passive elements distributed at a short distance along the rail tracks which may respond to interrogation signals emitted by antennae mounted under the locomotive and the last wagon. By means of these solutions, the motion of the train may be identified in a unique manner at a low cost, obtaining position, speed and direction of motion of the shuttle. The shuttle driver may also use laser or radar sensors, for direct detection of the distance from the vehicle ahead, thus implementing a "controlled distance" type of driving.

Referring to the rail cranes, they should be capable of accurately identifying the type of containers they are required to handle possibly ascertaining the length in order to adapt the spreaders to the dimensions in use; furthermore, it is necessary to know the weight of each single container in order to allow the control system to optimize the loading onto the trains. Furthermore, the positioning of the rail cranes must be very accurate and capable of guaranteeing the possibility of handling emergency situations and interference with the external environment. The system for controlling the rail crane must particularly be capable of promptly blocking the automatic operation of the same, in case of detection, for example by means of radars or sensors IR, of foreign elements in the field of operation of the crane.

Interaction between the control systems is executed by communication protocols based on wireless systems coupled to power line communication systems and optical or ultrasonic systems.

Referring to the control of trains, the latter are preferably driven at a low speed in order to reduce the braking distance and hence save energy. Preferably, the trains are provided with regenerative braking electric energy recovery systems.

## Claims

1. Automatic system for handling and transporting containers between a quay and an inland stocking site (S), comprising:
- a quay crane (5) for loading and unloading containers for ships docking at the quay,
- rail transport means (2) for transporting said containers between said quay and said stocking site, said transport means comprising a rail track module (2') for loading and/or unloading containers onto and/or from trains at the quay area,
**characterised in that**
said rail track module (2') comprises a series of rail tracks (2") parallel to each other which, at said quay area,
run along a direction that is inclined with respect to said quay by an angle (θ) comprised between 0° and 90°, extreme terms excluded, and which are arranged such that said quay crane directly interfaces with said rail tracks (2") of with an area (7) adjacent to said rail tracks (2") and extending along said rail tracks of said module, said area being apt to receive containers and being served by said quay crane (5) and by a rail crane (6), said rail crane (6) moving on rails that run along a direction that is substantially parallel to said rail tracks (2") of said module in order to load and/or unload containers onto and/or from trains on said rail tracks.

2. Automatic System according to claim 1, **characterised in that** said quay crane (5) is apt to load and/or to unload containers onto and/or from trains.

3. Automatic System according to claim 1, **characterised in that** said rail crane is a quay gantry crane that goes over one or more of the rail tracks of said module and said adjacent area.

4. Automatic System according to claim 1, **characterised in that** the inclination angle (θ) of said rail tracks with respect to said quay is comprised between 0° and 20°.

5. Automatic System according to claim 4, **characterised in that** said inclination angle (θ) is of about 7°.

6. Automatic System according to claim 3, **characterised in that** said rail crane goes over two rail tracks of said module.

7. Automatic System according to claim 6, **characterised in that** one of said two rail tracks is a flush track such that the area occupied thereby is suitable to receive containers.

8. Automatic System according to claim 1, **characterised in that** said rail transport means comprise automatically guided trains (3) apt to transport said containers and **in that** control means are provided in order to monitor the position of the containers on the basis of the position of said trains and of the position at which said containers are loaded onto the trains.

## Patentansprüche

1. Automatisches System zum Umschlagen und Transportieren von Containern zwischen einem Kai und einem landeinwärts befindlichen Lagerort (S), das umfasst:
einen Hafenkran (5) zum Laden und Entladen von Containern für an dem Kai anlegende Schiffe,
eine Schienen-Transporteinrichtung (2) zum Transportieren der Container zwischen dem Kai und dem Lagerort, wobei die Transporteinrichtung ein Schienenbahn-Modul (2') zum Laden und/oder Entladen von Containern auf und/oder von Züge/n in dem Kai-Bereich umfasst,
**dadurch gekennzeichnet, dass**
das Schienenbahn-Modul (2') eine Reihe von Schienenbahnen (2") umfasst, die parallel zueinander sind und in dem Kai-Bereich in einer Richtung verlaufen, die in Bezug auf den Kai um einen Winkel (θ) geneigt ist, der, Extremwerte ausgeschlossen, zwischen 0° und 90° liegt, und die so angeordnet sind, dass sich der Hafenkran direkt an die Schienenbahnen (2") oder an einen Bereich (7) anschließt, der an die Schienenbahnen (2") angrenzt und an den Schienenbahnen des Moduls entlang verläuft, wobei sich der Bereich zum Aufnehmen von Containern und zur Versorgung durch den Hafenkran (5) sowie durch einen Schienenkran (6) eignet und sich der Schienenkran (6) auf Schienen bewegt, die in einer Richtung verlaufen, die im Wesentlichen parallel zu den Schienenbahnen (2") des Moduls ist, um Container auf und/oder von Züge/n auf den Schienenbahnen zu laden und/oder zu entladen.

2. Automatisches System nach Anspruch 1, **dadurch gekennzeichnet, dass** sich der Hafenkran (5) zum Laden und/oder zum Entladen von Containern auf und/oder von Züge/n eignet.

3. Automatisches System nach Anspruch 1, **dadurch gekennzeichnet, dass** Schienenkran ein Hafen-Portalkran ist, der sich über eine oder mehrere der Schienenbahnen des Moduls und den angrenzenden Bereich erstreckt.

4. Automatisches System nach Anspruch 1, **dadurch gekennzeichnet, dass** der Neigungswinkel (θ) der Schienenbahnen in Bezug auf den Kai zwischen 0° und 20° liegt.

5. Automatisches System nach Anspruch 4, **dadurch gekennzeichnet, dass** der Neigungswinkel (θ) ungefähr 7° beträgt.

6. Automatisches System nach Anspruch 3, **dadurch gekennzeichnet, dass** sich der Schienenkran über zwei Schienenbahnen des Moduls erstreckt.

7. Automatisches System nach Anspruch 6, **dadurch gekennzeichnet, dass** eine der zwei Schienenbahnen eine abgesenkte Bahn ist, so dass der von ihr eingenommene Bereich zum Aufnehmen von Containern geeignet ist.

8. Automatisches System nach Anspruch 1, **dadurch gekennzeichnet, dass** die Schienen-Transporteinrichtung automatisch geleitete Züge (3) umfasst, die sich zum Transportieren der Container eignen, und dass Kontrolleinrichtungen zum Überwachen der Position der Container auf Basis der Position der Züge sowie der Position vorhanden sind, an der die Container auf die Züge geladen werden.

## Revendications

1. Système automatique de manipulation et de transport de conteneurs entre un quai et un site de stockage terrestre (S), comprenant :
- une grue de quai (5) pour le chargement et le déchargement de conteneurs pour des bateaux accostant le quai,
- des moyens de transport sur rail (2) pour le transport desdits conteneurs entre ledit quai et ledit site de stockage, lesdits moyens de transport comprenant un module de voie ferrée (2') pour le chargement et/ou le déchargement de conteneurs sur et/ou de trains sur la zone de quai, **caractérisé en ce que**
ledit module de voie ferrée (2') comprend une série de voies ferrées (2") parallèles les unes aux autres qui, sur ladite zone de quai, s'étendent le long d'une direction qui est inclinée par rapport audit quai par un angle (θ) compris entre 0 et 90°, termes extrêmes exclus et qui sont disposées de sorte que ladite grue de quai se relie directement auxdites voies ferrées (2") ou à une zone (7) adjacente auxdites voies ferrées (2") et s'étendant le long desdites voies ferrées dudit module, ladite zone étant apte à recevoir des conteneurs et étant desservie par ladite grue de quai (5) et par une grue sur voie ferrée (6), ladite grue sur voie ferrée (6) se déplaçant sur des rails qui s'étendent le long d'une direction qui est sensiblement parallèle auxdites voies ferrées (2") dudit module dans le but de charger et/ou décharger les conteneurs sur et/ou à partir des trains sur lesdites voies ferrées.

2. Système automatique selon la revendication 1, **caractérisé en ce que** ladite grue de quai (5) est apte à charger et/ou décharger les conteneurs sur et/ou a partir des trains.

3. Système automatique selon la revendication 1, **caractérisé en ce que** ladite grue sur voie ferrée est une grue portique de quai qui passe sur une ou plusieurs des voies ferrées dudit module et ladite zone adjacente.

4. Système automatique selon la revendication 1, **caractérisé en ce que** l'angle d'inclinaison (θ) desdites voies ferrées par rapport audit quai est compris entre 0 et 20°.

5. Système automatique selon la revendication 4, **caractérisé en ce que** ledit angle d'inclinaison (θ) s'élève environ à 7°.

6. Système automatique selon la revendication 3, **caractérisé en ce que** ladite grue sur voie ferrée passe sur deux voies ferrées dudit module.

7. Système automatique selon la revendication 6, **caractérisé en ce que** l'une desdites deux voies ferrées est une voie ferrée immergée de sorte que la zone qu'elle occupe est adaptée pour recevoir des conteneurs.

8. Système automatique selon la revendication 1, **caractérisé en ce que** lesdits moyens de transport sur rail comprennent des trains guidés automatiquement (3) aptes à transporter lesdits conteneurs et **en ce que** des moyens de commande sont prévus dans le but de surveiller la position des conteneurs sur la base de la position desdits trains et de la position, sur laquelle lesdits conteneurs sont chargés sur les trains.
